# EUROPEAN PATENT APPLICATION

(11) **EP 4 776 479 A1**
(43) Date of publication of application: **15.07.2026**
(21) Application number: 25223958.7
(22) Date of filing: 16.12.2025
(51) Int. Cl.: H02K 1/276

(54) **MAGNETIC ROTATING ELECTRIC DEVICE**

(30) Priority: 10.01.2025 IN 202511002437; 24.02.2025 US 202519061494
(71) Applicant: Honeywell International Inc., Charlotte, NC 28202 (US)
(72) Inventor: K, Seenu, Charlotte 28202 (US); JUNG, Yongbae, Charlotte 28202 (US)
(74) Representative: Ingrassia, Fisher & Lorenz UK Ltd.

(57) **Abstract**

A magnetic rotating electric device that includes a stator and a rotor. The rotor is received within a central passage of the stator. An airgap is formed between the inner surface of the stator and an outer surface of the rotor. The rotor includes a plurality of spaced rotor magnets that are received within magnet pockets. Each magnet pocket includes a first open section and a second open section when a rotor magnet is received within the magnet pocket. The rotor includes an outer pocket forming portion for each magnet pocket that extends from the outer surface of the rotor to a first pocket side of an associated magnet pocket. The thickness of the outer pocket forming portion proximate first and second magnet ends of a magnet in a first open section and a second open section of an associated pocket is equal to a distance of the airgap.

## Description

### CROSS REFERENCE TO RELATED APPLICATIONS

This application claims benefit to Indian Provisional Application No. 202511002437, filed on January 10, 2025, and titled "MAGNETIC ROTATING ELECTRIC DEVICE," the contents of which are incorporated herein in their entirety.

### BACKGROUND

Electric motors are used to convert electricity into mechanical energy. A basic electric motor includes a rotor and a stator. The rotor is a rotating part that includes magnets. The output of the electric motor is operationally coupled to the rotor. The stator is positioned around the rotor and is used to generate a force that rotates the rotor. The stator includes stator windings that are connected to input wires. The input wires are in turn coupled to a power source. An electric motor may also include one or more bearings to support the rotor as it rotates and a bracket to support the bearing. An electric current applied to the stator windings interacts with magnetic fields of the magnets in the rotor to generate a torque around an axis of the rotor. An electrical generator is mechanically the same as an electric motor with mechanical rotation of the rotor generating a current in the stator windings that are coupled to output wires. As the use of electric motors becomes more and more prevalent in different applications, more efficient electric motors are desired.

For the reasons stated above and for other reasons stated below which will become apparent to those skilled in the art upon reading and understanding the present specification, there is a need in the art for an improved effective and efficient magnetic rotating electric device.

### SUMMARY

The following summary is made by way of example and not by way of limitation. It is merely provided to aid the reader in understanding some of the aspects of the subject matter described. Embodiments provide a magnetic rotating electric device with a select air gap between the rotor and stator and select rotor magnetic pockets that in part position the permanent magnets of the rotor to improve efficiency of the magnetic rotating electric device.

In one embodiment, a magnetic rotating electric device is provided. The magnetic rotating electric device includes a stator, a plurality of spaced stator windings, a plurality of rotor magnets and a rotor. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section is adjacent the second magnet end. The rotor includes an outer pocket forming portion for each magnet pocket that extends from the outer surface of the rotor to the first pocket side of the associated magnet pocket. Wherein a thickness of the outer pocket forming portion in the first open section and the second open section of the associated magnet pocket that is proximate each of the first magnet end and the second magnet end of the associated magnet is equal to a distance of the airgap. Further, the thickness of the outer pocket forming portion is based at least in part on a maximum revolutions-per-minute (RPM) of the rotor.

In another embodiment, another magnetic rotating electric device is provided. The magnetic rotating electric device includes a stator, a plurality of stator windings, a plurality of the rotor magnets and a rotor. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section is adjacent the second magnet end. Wherein a select second distance is within a range of two thirds of a first distance to the first distance. The first distance is measured between a first inner magnet corner formed at a first interface of the first magnet end and the second magnet side of a first rotor magnet and a second inner magnet corner formed at a second interface of the second magnet end and the second magnet side of an adjacent second magnet. The second distance is measured at a first outer corner of the first rotor magnet between a first radial ray that extends radially outward from the central axis of the rotor and touches the first inner magnet corner of the first rotor magnet and a second radial ray that extends outward from the central axis of the rotor and touches the first outer corner of the first rotor magnet.

In another embodiment, yet another a magnetic rotating electric device is provided. The magnetic rotating device includes a stator, a plurality of spaced stator windings, a plurality of rotor magnets and a stator. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section if adjacent the second magnet end. The rotor includes an outer pocket forming portion for each magnet pocket that extends from the outer surface of the rotor to the first pocket side of the associated magnet pocket. Wherein a thickness of the outer pocket forming portion in the first open section and the second open section of the associated magnet pocket that is proximate each of the first magnet end and the second magnet end of the associated magnet is equal to a distance of the airgap. Further wherein the thickness of the outer pocket forming portion is based at least in part on a maximum revolutions-per-minute (RPM) of the rotor. Further yet wherein a first inner magnet corner that is formed at a first interface of the first magnet end and the second magnet side of a first rotor magnet is a select first distance from a second inner magnet corner formed at a second interface of the second magnet end and the second magnet side of an adjacent second magnet. The first distance is based at least in part on a maximum airgap magnetic flux density and rotor stress due to a centrifugal force. Further, a select second distance is within a range of two thirds of the first distance to the first distance. Wherein the second distance is measured at a first outer corner of the first rotor magnet between a first radial ray that extends radially outward from the central axis of the rotor and touches the first inner magnet corner of the first rotor magnet and a second radial ray that extends outward from the central axis of the rotor and touches the first outer corner of the first rotor magnet.

### BRIEF DESCRIPTION OF THE DRAWINGS

The present invention can be more easily understood and further advantages and uses thereof will be more readily apparent, when considered in view of the detailed description and the following figures in which:
Figure 1 is a block diagram of a magnetic rotating electric device according to an example aspect of the present invention;
Figure 2A illustrates a cross-sectional end view of a magnetic rotating electric device according to an example aspect of the present invention;
Figure 2B illustrates a partial close up cross-sectional end view of the magnetic rotating electric device of Figure 2A;
Figure 2C illustrates a partial close up cross-sectional end view of the magnetic rotating electric device of Figure 2A illustrating permanent magnetic orientation direction of the stator magnets according to an example aspect of the present invention;
Figure 3A illustrates a cross-sectional end view of another magnetic rotating electric device according to an example aspect of the present invention;
Figure 3B illustrates a partial close up cross-sectional end view of the magnetic rotating electric device of Figure 3A;
Figure 3C illustrates yet another partial close up cross-sectional end view of the magnetic rotating electric device of Figure 3A;
Figure 4A illustrates a cross-sectional end view of a rotor according to an example aspect of the present invention; and
Figure 4B illustrates a cross-sectional end view of another rotor according to an example aspect of the present invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

In some embodiments of the present invention, a magnetic rotating electric device with a select airgap distance between a rotor and a stator is equal to a thickness of an outer pocket forming portion of rotor magnetic pockets of the rotor to improve efficiency of the magnetic rotating electric device. This feature helps keep a stator saturation within a set limit. Further embodiments may relate to electrical devices that include a rotor that have permanent magnets inside a lamination. Such devices include, but are not limited to, electric motors and electric generators. Further, at least some embodiments implement a rotor design with an interior permanent magnet synchronous motors (IPMSM) concept. Some embodiments relate to a rotor structure with an equal physical airgap and an unequal magnetic airgap. Rotor lamination designs discussed herein help to achieve a better performance over surface mounted permanent magnet motors with reduced magnet volume by utilizing magnet torque and reluctance torque with lower magnet volume and cost.

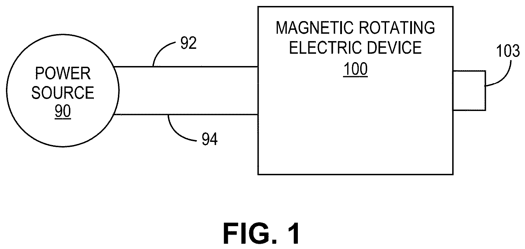

Referring to Figure 1, a block diagram of a magnetic rotating electric device 100 of an example embodiment is illustrated. The magnetic rotating electric device, in this example may be a permanent magnet rotating motor. The magnetic rotating electric device 100 is illustrated as including an output 103. The output 103 provides motor/engine torque in this example. A power source 90 couples current to stator windings of the magnetic rotating electric device 100 via input wires 92 and 94.

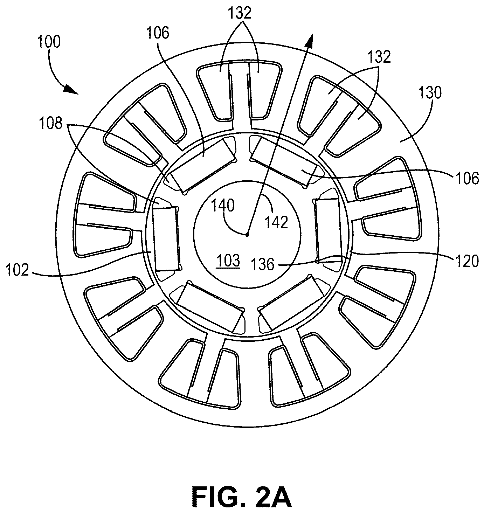

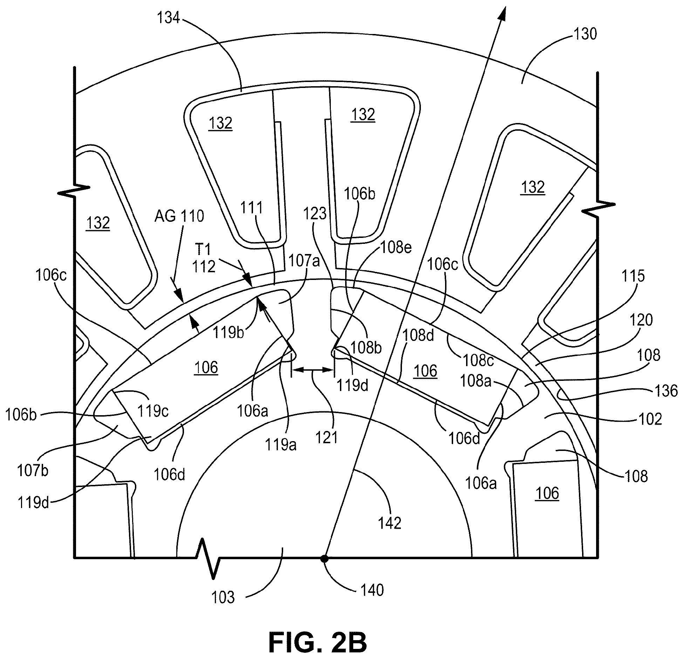

A cross-sectional end view of the magnetic rotating electric device 100 is illustrated in Figure 2A. A close up end view of a portion of the magnetic rotating electric device 100 is further illustrated in Figure 2B. The magnetic rotating electric device 100 includes rotor 102 and stator 130. Rotor 102 includes a plurality of magnet pockets 108. Each magnet pocket 108 includes an inside surface 108e that includes a first pocket end 108a spaced from a second pocket end 108b and a first pocket side 108c spaced from a second pocket side 108d. Each magnet pocket 108 houses an associated rotor magnet 106. In the example of Figure 2B, the first pocket side 108c of each magnet pocket 108 in the rotor 102 is wider than the second pocket side 108d of the magnet pocket 108. Each rotor magnet 106 includes a first magnet end 106a and an oppositely positioned second magnet end 106b, and a first magnet side 106c and an oppositely positioned second magnet side 106d. The first magnet end 106a and the second magnet end 106b are spaced apart by the first magnet side 106c and the second magnet side 106d. The stator 130 further includes a plurality of spaced stator pockets 134 in which stator windings 132 are housed. The stator windings 132 are coupled to the input wires 92 and 94 discussed above. The plurality of windings 132 are spaced by the spaced stator pockets 134. The stator 130 includes an inner surface 136 the defines a central passage 120. The rotor 102 is located within the central passage 120 of stator 130.

An outer diameter of the rotor 102 is less than the inner diameter of the stator 130 so that an airgap 110 (AG) is formed between the inner surface 136 of the stator 130 and an outer surface 115 of rotor 102. In some embodiments, a thickness (T1) 112 of a portion of the rotor 102 that forms part of a rotor pocket 108 at, near or adjacent a first magnet end 106a and a second magnet end 106b of each associated rotor magnet 106 is equal to the airgap 110.

In the example illustrated in Figure 2B, the first pocket side 108c of each magnet pocket 108 is positioned closest to the outer surface 115 of the rotor 102. Each rotor magnet 106 is received within an associated magnet pocket 108 of the rotor 102. Each magnet pocket 108 includes a first open section 107a and a second open section 107b when an associated rotor magnet 106 is received within the magnet pocket 108. The first open section 107a is adjacent to the first magnet end 106a and the second open section 107b is adjacent to the second magnet end 106b. The rotor 102 includes an outer pocket forming portion 111 for each magnet pocket 108 that extends from the outer surface 115 of the rotor 102 to the first pocket side 108c of an associated magnet pocket 108. The thickness of the outer pocket forming portion 111 proximate each of a first magnet end 106a and a second magnet end 106b of a magnet 106 in an associated first open section 107a and second open section 107b is equal to a distance of the airgap 110. In one example, the thickness T1 112 of the outer pocket forming portion 111 proximate each of the first magnet end 106a and the second magnet end 106b of the magnet 106 in the associated first open section 107a and second open section 107b is based at least in part on a maximum revolutions-per-minute (RPM) of the rotor. Further in the example of Figure 2B, the first open section 107a and the second open section 107b includes a curved inside surface 123.

Further illustrated in Figure 2B is a central axis 140 of the magnetic rotating electric device 100 and an outward radial direction 142 from the central axis. The rotor 102 is configured to rotate within the central passage 120 of the stator 130 about the central axis 140.

Further in an example, a first inner magnet corner 119a formed at an interface of the first magnet end 106a and the second magnet side 106d of a first magnet 106 is a select first distance SD1 121 from a second magnet corner 119d formed at an interface of the second magnet end 106b and the second magnet side 106d of an adjacent second magnet 106. In an example, the select first distance SD1 is based at least in part on a maximum airgap magnetic flux density and rotor stress due to a centrifugal force. Also illustrated in Figure 2B is a first outer magnet corner 119b formed at an interface of the first magnet end 106a and the first magnet side 106c and a second outer corner 119c formed at an interface of the second magnet end 106b and the first magnet side 106c of each rotor magnet 106.

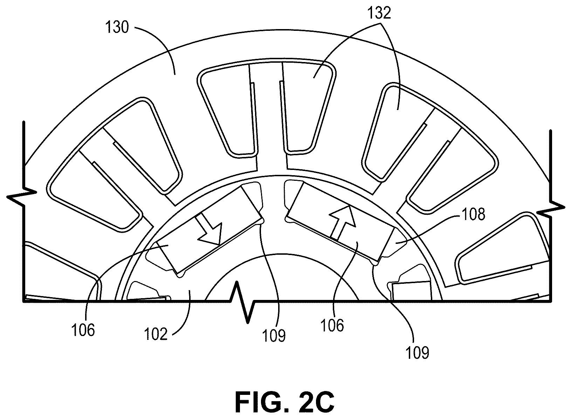

Figure 2C illustrates another close up end view of a portion of the magnetic rotating electric device 100. This view also uses arrows to illustrates a permanent magnetic orientation direction of the stator magnets 106 in an embodiment. Also, illustrated in the example, of Figure 2C, are secondary openings 109 in the magnet pocket 108 that aid in the assembly of a stator magnet 106 into an associated magnet pocket 108. The magnetic rotating electric device 100 illustrated in Figures 2A through 2C provides an example with nine stator slots and six stator poles. A low stator and rotor lamination magnetic saturation limit may be due to a higher pole and slot combination with a max value of about 1.4T. Other slot and pole combinations may be used in other examples.

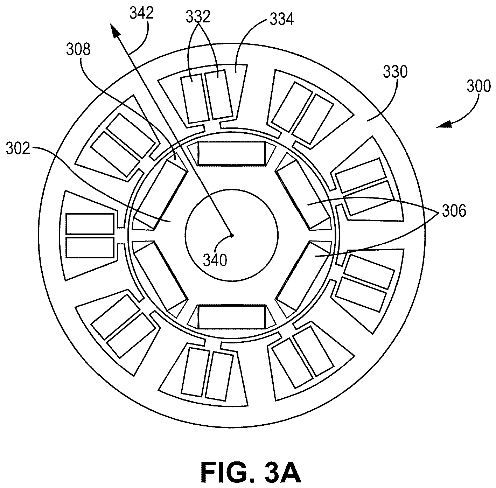

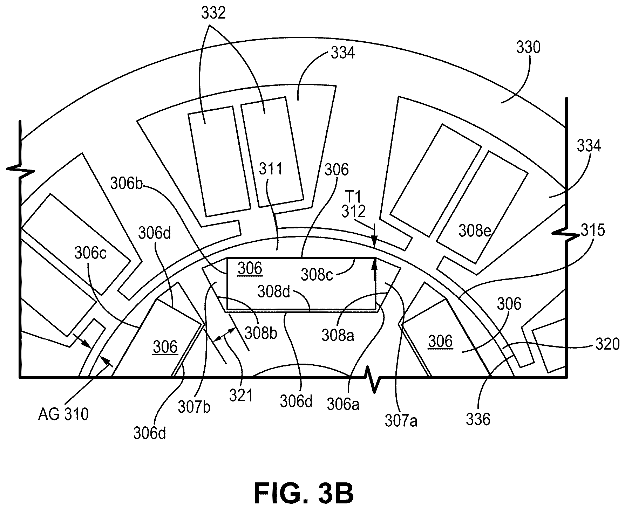

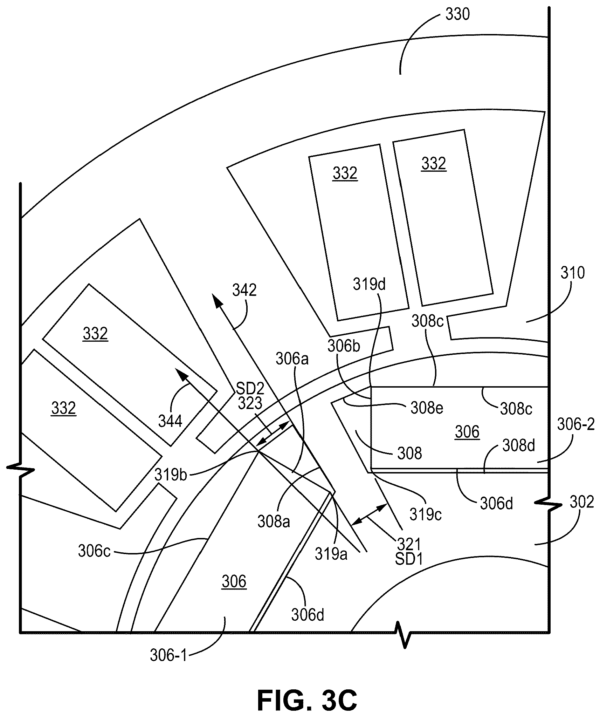

Figure 3A illustrates a cross-sectional end view of another magnetic rotating electric device 300 example. Close up end views of a portion of the magnetic rotating electric device 300 is further illustrated in Figure 3B and Figure 3C.

The magnetic rotating electric device 300 of this example also includes a rotor 302 and a stator 330. The rotor 302 includes a plurality of magnet pockets 308. Each magnet pocket 308 includes and inside surface 308e that includes a first pocket end 308a spaced from a second pocket end 308b and a first pocket side 308c spaced from a second pocket side 308d. Each magnet pocket 308 houses an associated rotor magnet 306. Each rotor magnet 306 includes a first rotor end 306a and an opposably positioned second rotor end 306b, and a first rotor side 306c and an opposably positioned second rotor side 306d. The first rotor end 306a and the second rotor end 306b are spaced apart by the first rotor side 306c and the second rotor side 306d. Stator 330 further includes a plurality of spaced stator pockets 334 in which stator windings 332 are housed. The stator windings 332 are coupled to the input wires, such as input wires 92 and 94 discussed above. The plurality of windings 332 are spaced by the spaced stator pockets 334. The stator 330 includes an inner surface 336 the defines a central passage 320. The rotor 302 is received within the central passage 320 of stator 330. Further illustrated in Figure 3A is a central axis 340 (into and out of the page) of the magnetic rotating electric device 300 and a radial direction 142 from the central axis 340.

An outer diameter of the rotor 302 is less than the inner diameter of the stator 330 so that an airgap 310 (AG) is formed between the inner surface 336 of the stator 330 and an outer surface 315 of the rotor 302. In some embodiments, a thickness (T1) 312 of a portion of the rotor 302 that forms part of a rotor pocket 308 near or adjacent first and seconds ends 306a and 306b of each associate rotor magnet is equal to the airgap 310. Further in the example illustrated in Figure 3B, the first pocket side 308c of each magnet pocket 108 is positioned closest to the outer surface 315 of the rotor 302. Each rotor magnet 306 is received within an associated magnet pocket 308 of the rotor 302. Each magnet pocket 308 includes a first open section 307a and a second open section 307b when an associated rotor magnet 306 is received within the magnet pocket 308. The first open section 307a is adjacent to the first magnet end 306a and the second open section 307b is adjacent to the second magnet end 306b. The rotor 302 includes an outer pocket forming portion 311 for each magnet pocket 308 that extends from the outer surface 315 of the rotor 302 to the first pocket side 308c of an associated magnet pocket 308. The thickness T1 312 of the outer pocket forming portion 311 proximate each of a first magnet end 306a and a second magnet end 306b of a magnet 306 in an associated first open section 307a and second open section 307b is equal to a distance of the airgap 310. In one example, the thickness T1 312 of the outer pocket forming portion 311 proximate each of the first magnet end 306a and the second magnet end 306b of the magnet 306 in the associated first open section 307a and second open section 307b is based at least in part on a maximum revolutions-per-minute (RPM) of the rotor.

The rotor 302 is configured to rotate within the central passage 320 of the stator 330 about the central axis 340. As discussed above, each rotor magnet 306 is received in an associated rotor magnet pocket 308 of the rotor 302. The first magnet side 306c of each rotor magnet 306 is positioned adjacent a first pocket side 308c of the inside surface 308e of each rotor magnet pocket 308.

As best illustrated in the Figure 3C, each magnet 306 includes a first inner magnet corner 319a that is formed at the interface of the first magnet end 306a and the second magnet side 306d, a first outer magnet corner 319b that is formed at the interface of the first magnet end 306a and the first magnet side 306c, a second inner magnet corner 319c that is formed at the interface of the second magnet end 306b and the second magnet side 306d, and a second outer magnet corner 319d that is formed at the interface of the second magnet end 306b and the first magnet side 306c.

In one example, a first select distance (SD1) 321, that is between inner corners of adjacent rotors magnets 306 (such as first inner magnet corner 319a of rotor magnet 306-1 and second inner magnet corner 319c of second rotor magnet 306-2 in Figure 3C), has a relationship to a second select distance (SD2) 323. Second distance SD2 323 is a distance at the first outer magnet corner 319b between a first radial ray 342 that extends radially outward from the central axis 340 through the first inner magnet corner 319a (touches the first inner magnet corners 319a) of magnet 306-1 and a second radial ray 344 that extends radially outward from the central axis 340 through the first outer magnet corner 319b of magnet 306-1 (touches the first outer magnet corner 319b) as is illustrated in Figure 3C. The second distance SD2 323 is measured between the first radial ray 342 and the second radial ray 344 at the first outer magnet corner 319b. Further in an example, the select first distance SD1 321 is based on a maximum airgap magnetic flux density and rotor stress due to a centrifugal force. In one example, the second distance SD2 323 is within a range of two thirds of the first distance SD1 321 to the first distance SD1 321. Further in one example, the second distance SD2 323 is less than or equal to the first distance SD1 321. Further in one example, two thirds of the first distance SD1 323 is greater than or equal to the second SD2 323. It should be understood that the same relationship described above may occur in reference to the aspects in the other end of a rotor magnet 306 and that the relationship described is present with each rotor magnet 306.

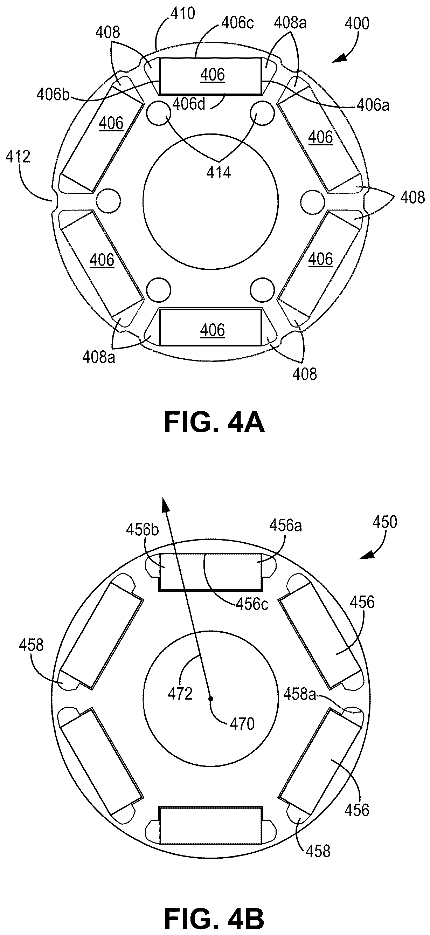

Other rotor designs may be used. Examples of other possible rotor designs for magnetic rotating electric devices are illustrated in the rotor cross-sectional end views provided in Figure 4A and Figure 4B. Figure 4A illustrates a rotor 400 of an example. Rotor 400 includes rotor magnets 406 that are received magnet pockets 408. The magnet pockets 408, in this example, include open curved portions 408a near first and second ends 406a and 406b of a radially outward side 406c of the rotor magnets 406. The open curved portions 408a radially taper inward to a second side 406d of each magnet 406 received within an associate magnet pocket 408. Further in this example, an outer surface 410 of an out portion of the rotor 400 defines the outer diameter of the rotor 400. As illustrated, the outer surface includes spaced grooves 412. The spaced grooves 412 are positioned between the magnet pockets 408. Also, in the rotor design of the Figure 4A, the rotor 400 includes passages 414 (or voids). Each passage 414, in this example, is located radially inward from the magnet pockets 408 in the rotor 400. Further each passage 414, in this example, is aligned with an associated groove 412 between adjacent magnet pockets 408. The associated grooves 412 of the rotor design in Figure 4A reduces torque pulsations. In an example, T1 312 in this embodiment is equal the airgap 310 throughout the rotor bridge in rotor 400.

The rotor design of rotor 450 of Figure 4B includes a plurality of magnet pockets 458 in which associated rotor magnets 456 are housed. Each magnet pocket 458, in this example, includes opened curved portions 458a that extend out from first and second ends 456a and 456b of each magnet pocket 458. Figure 4B also illustrates a central axis 470 and a radial ray 472 extending outward form the central axis 470. In this example, the opened curved portion extends from a first side 456c of an associated rotor magnet 456 radially inward to approximately a mid-portion of the first and second ends 456a and 456b of the rotor magnet 456. Hence, other designs of rotors may be used. The example illustrated in Figure 4B provides a smooth insertion of the rotor magnets 456 in associated magnet pockets 458 of rotor 450.

### EXAMPLE EMBODIMENTS

Example 1 includes a magnetic rotating electric device. The magnetic rotating electric device includes a stator, a plurality of spaced stator windings, a plurality of rotor magnets and a rotor. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section is adjacent the second magnet end. The rotor includes an outer pocket forming portion for each magnet pocket that extends from the outer surface of the rotor to the first pocket side of the associated magnet pocket. Wherein a thickness of the outer pocket forming portion in the first open section and the second open section of the associated magnet pocket that is proximate each of the first magnet end and the second magnet end of the associated magnet is equal to a distance of the airgap. Further, the thickness of the outer pocket forming portion is based at least in part on a maximum revolutions-per-minute (RPM) of the rotor.

Example 2 includes the magnetic rotating electric device of Example, further wherein a first inner magnet corner formed at a first interface of the first magnet end and the second magnet side of a first rotor magnet is a select first distance from a second inner magnet corner formed at a second interface of the second magnet end and the second magnet side of an adjacent second magnet. The first distance is based at least in part on a maximum airgap magnetic flux density and rotor stress due to a centrifugal force.

Example 3 includes the magnetic rotating electric device of Example 2, further wherein a select second distance is within a range of two thirds of the first distance to the first distance. Wherein the second distance is measured at a first outer corner of the first rotor magnet between a first radial ray that extends radially outward from the central axis of the rotor and touches the first inner magnet corner of the first rotor magnet and a second radial ray that extends outward from the central axis of the rotor and touches the first outer corner of the first rotor magnet.

Example 4 includes the magnetic rotating electric device of Example 2, further wherein a select second distance is within a range of less than to equal to the first distance. Wherein the second distance is measured at a first outer corner of the first rotor magnet between a first radial ray that extends radially outward from the central axis of the rotor and touches the first inner magnet corner of the first rotor magnet and a second radial ray that extends outward from the central axis of the rotor (302) and touches the first outer corner of the first rotor magnet.

Example 5 includes the magnetic rotating electric device of any of the Examples 1-4, wherein the first pocket side of each magnet pocket in the rotor is wider than the second pocket side of the magnet pocket.

Example 6 includes the magnetic rotating electric device of any of the Examples 1-5, wherein each of the first open section and the second open section of each magnet pocket of the rotor includes a curved inside surface.

Example 7 includes the magnetic rotating electric device of any of the Examples 1-6, wherein each of the first open section and the second open section of each magnet pocket of the rotor extends from a mid-portion of an associated one of a first magnetic end and a second magnet end of an associated magnet in the magnet pocket to an associated pocket first side of the magnet pocket.

Example 8 includes the magnetic rotating electric device of any of the Examples 1-7, wherein each of the first open section and the second open section of each magnet pocket of the rotor includes a curved portion that extends radially inward beyond a second magnet side of an associated magnet in the magnet pocket.

Example 9 includes the magnetic rotating electric device of any of the Examples 1-8, wherein the outer surface of the rotor includes a plurality of grooves, each groove positioned between adjacent magnet pockets, further wherein the rotor includes a plurality of passages, each passage radially aligned with an associated groove of the plurality of grooves.

Example 10 includes a magnetic rotating electric device. The magnetic rotating electric device includes a stator, a plurality of stator windings, a plurality of the rotor magnets and a rotor. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section is adjacent the second magnet end. Wherein a select second distance is within a range of two thirds of a first distance to the first distance. The first distance is measured between a first inner magnet corner formed at a first interface of the first magnet end and the second magnet side of a first rotor magnet and a second inner magnet corner formed at a second interface of the second magnet end and the second magnet side of an adjacent second magnet. The second distance is measured at a first outer corner of the first rotor magnet between a first radial ray that extends radially outward from the central axis of the rotor and touches the first inner magnet corner of the first rotor magnet and a second radial ray that extends outward from the central axis of the rotor and touches the first outer corner of the first rotor magnet.

Example 11 includes the magnetic rotating electric device of Example 10, further wherein the rotor includes an outer pocket forming portion for each magnet pocket that extends from the outer surface of the rotor to the first pocket side of the associated magnet pocket. Wherein a thickness of the outer pocket forming portion in the first open section and the second open section of the associated magnet pocket that is proximate each of the first magnet end and the second magnet end of the associated magnet is equal to a distance of the airgap. Further wherein, the thickness of the outer pocket forming portion is based at least in part on a maximum revolutions-per-minute (RPM) of the rotor.

Example 12 includes the magnetic rotating electric device of any of the Examples 10-11, further wherein the select first distance is based at least in part on a maximum airgap magnetic flux density and rotor stress due to a centrifugal force.

Example 13 includes the magnetic rotating electric device of any of the Examples 10-12, wherein the first pocket side of each magnet pocket in the rotor is wider than the second pocket side of the magnet pocket.

Example 14 includes the magnetic rotating electric device of any of the Examples 10-13, wherein each of the first open section and the second open section of each magnet pocket of the rotor includes a curved inside surface.

Example 15 includes the magnetic rotating electric device of any of the Examples 10-14, wherein each of the first open section and the second open section of each magnet pocket of the rotor extends from a mid-portion of an associated one of a first magnetic end and a second magnet end of an associated magnet in the magnet pocket to an associated pocket first side of the magnet pocket.

Example 16 includes a magnetic rotating electric device. The magnetic rotating device includes a stator, a plurality of spaced stator windings, a plurality of rotor magnets and a stator. The stator includes an inner surface that defines a central passage. The plurality of spaced stator windings are housed within the stator. Each rotor magnet includes a first magnet end and an opposably positioned second magnet end. Each rotor magnet further includes a first magnet side and an opposably positioned second magnet side. The first magnet end and the second magnet end are spaced apart by the first magnet side and the second magnet side. The rotor is received within the central passage of the stator. The rotor is configured to rotate within the central passage of the stator about a central axis. An airgap is formed between the inner surface of the stator and an outer surface of the rotor. The rotor has a plurality of spaced magnet pockets. Each magnet pocket includes an inside surface that forms the magnet pocket. Each magnet pocket includes a first pocket end and an opposably positioned second pocket end. Each magnet pocket further includes a first pocket side and an opposably positioned second pocket side. The first pocket side is positioned closest to the outer surface of the rotor. Each rotor magnet is received within an associated magnet pocket of the rotor. Each magnet pocket further includes a first open section and a second open section when a rotor magnet is received within the associated magnet pocket. The first open section is adjacent the first magnet end and the second open section if adjacent the second magnet end. The rotor includes an outer pocket forming portion for each magnet pocket that extends from the outer surface of the rotor to the first pocket side of the associated magnet pocket. Wherein a thickness of the outer pocket forming portion in the first open section and the second open section of the associated magnet pocket that is proximate each of the first magnet end and the second magnet end of the associated magnet is equal to a distance of the airgap. Further wherein the thickness of the outer pocket forming portion is based at least in part on a maximum revolutions-per-minute (RPM) of the rotor. Further yet wherein a first inner magnet corner that is formed at a first interface of the first magnet end and the second magnet side of a first rotor magnet is a select first distance from a second inner magnet corner formed at a second interface of the second magnet end and the second magnet side of an adjacent second magnet. The first distance is based at least in part on a maximum airgap magnetic flux density and rotor stress due to a centrifugal force. Further, a select second distance is within a range of two thirds of the first distance to the first distance. Wherein the second distance is measured at a first outer corner of the first rotor magnet between a first radial ray that extends radially outward from the central axis of the rotor and touches the first inner magnet corner of the first rotor magnet and a second radial ray that extends outward from the central axis of the rotor and touches the first outer corner of the first rotor magnet.

Example 17 includes the magnetic rotating electric device of Example 16, wherein the first pocket side of each magnet pocket in the rotor is wider than the second pocket side of the magnet pocket.

Example 18 includes the magnetic rotating electric device of any of the Examples 16-17, wherein each of the first open section and the second open section of each magnet pocket of the rotor includes a curved inside surface.

Example 19 includes the magnetic rotating electric device of any of the Examples 16-18, wherein each of the first open section and the second open section of each magnet pocket of the rotor extends from a mid-portion of an associated one of the first magnetic end and the second magnet end of the associated magnet in the magnet pocket to an associated pocket first side of the magnet pocket.

Example 20 includes the magnetic rotating electric device of any of the Examples 16-19, wherein the outer surface of the rotor includes a plurality of grooves, each groove positioned between adjacent magnet pockets, further wherein the rotor includes a plurality of passages, each passage radially aligned with an associated groove of the plurality of grooves.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A permanent magnet energy generating device (100, 300) comprising:
a stator (130, 330) including an inner surface (136, 336) that defines a central passage (120, 320);
a plurality of spaced stator windings (132, 332) housed within the stator (130, 330);
a plurality of rotor magnets (106, 306), each rotor magnet (106, 306) includes a first magnet end (106a, 306a) and an opposably positioned second magnet end (106b, 306b), each rotor magnet (106, 306a) further including a first magnet side (106c, 306c) and an opposably positioned second magnet side (106d, 306d), the first magnet end (106a, 306d) and the second magnet end (106b) are spaced apart by the first magnet side (106c, 306b) and the second magnet side (106d, 306d); and
a rotor (102, 302) received within the central passage (120, 320) of the stator (130, 330), the rotor (102, 302) configured to rotate within the central passage (120, 320) of the stator (130, 330) about a central axis (140, 340), an airgap (110, 310) formed between the inner surface (136, 336) of the stator (130, 310) and an outer surface (115, 315) of the rotor (102, 302), the rotor (102, 302) having a plurality of spaced magnet pockets (108, 308), each magnet pocket (108, 308) including an inside surface (108e, 308e) that forms the magnet pocket (108, 308), each magnet pocket (108, 308) including a first pocket end (108a, 308a) and an opposably positioned second pocket end (108b, 308b), each magnet pocket (108, 308) further including a first pocket side (108c, 308c) and an opposably positioned second pocket side (108d, 308d), the first pocket side (108c, 308c) being positioned closest to the outer surface (115, 315) of the rotor (102, 302), each rotor magnet (106, 306) received within an associated magnet pocket (108, 308) of the rotor (102, 302), each magnet pocket (108, 308) further including a first open section (107a, 307a) and a second open section (107b, 307b) when a rotor magnet (106, 306) is received within the associated magnet pocket (108, 308), the first open section (107a, 307a) being adjacent the first magnet end (106a, 306a) and the second open section (107b, 307b) being adjacent the second magnet end (106b, 306b), the rotor (102, 302) including an outer pocket forming portion (111, 311) for each magnet pocket (108, 308) that extends radially in from the outer surface (115, 315) of the rotor (102, 302) to the first pocket side (108c, 308c) of the associated magnet pocket (108, 308), wherein a thickness of the outer pocket forming portion (111, 311) in the first open section (107a, 307a) and the second open section (107b, 307b) of the associated magnet pocket (108, 308) that is proximate each of the first magnet end (106a, 306a) and the second magnet end (106b, 306b) of the associated magnet (106, 306) is equal to a distance of the airgap (110, 310), further wherein the thickness of the outer pocket forming portion (111, 311) is based at least in part on a maximum revolutions-per-minute (RPM) of the rotor (102, 302).

2. The permanent magnet energy generating device (100, 300) of claim 1, further wherein a first inner magnet corner (119a, 319a) formed at an interface of the first magnet end (106a, 306a) and the second magnet side (106d, 306d) of a first rotor magnet (306-1) is a select first distance (121, 321) from a second inner magnet corner (119d, 319d) formed at an interface of the second magnet end (106b, 306b) and the second magnet side (106d, 306d) of an adjacent second magnet (306-2), the first distance (121, 321) being based at least in part on a maximum airgap magnetic flux density and rotor stress due to a centrifugal force.

3. The permanent magnet energy generating device (300) of claim 2, further wherein a select second distance (323) is within a range of two thirds of the first distance (321) to the first distance (321), wherein the second distance (323) is measured at a first outer corner (319b) of the first rotor magnet (106-1) between a first radial ray (342) that extends radially outward from the central axis (340) of the rotor (302) and touches the first inner magnet corner (319a) of the first rotor magnet (306-1) and a second radial ray (344) that extends outward from the central axis (340) of the rotor (302) and touches the first outer corner (319b) of the first router magnet (306-1).

4. The permanent magnet energy generating device (300) of claim 2, further wherein a select second distance (323) is within a range of less than to equal to the first distance (323), wherein the second distance (323) is measured a first outer corner (319b) of the first rotor magnet (306-1) between a first radial ray (342) that extends radially outward from a central axis (340) of the rotor (302) and touches the first inner magnet corner (319a) of the first rotor magnet (306-1) and a second radial ray (344) that extends outward from the central axis (340) of the rotor (302) and touches the first outer corner (319b) of the first router magnet (306-1).

5. The permanent magnet energy generating device (100, 300) of claim 1, wherein the first pocket side (108c, 308c) of each magnet pocket (108, 308) in the rotor (102, 302) is wider than the second pocket side (108d, 308d) of the magnet pocket (108, 308).

6. The permanent magnet energy generating device (100, 300) of claim 1, wherein each of the first open section (107a, 307a) and the second open section (107b, 307b) of each magnet pocket (108, 308) of the rotor (102, 302) includes a curved inside surface (123).

7. The permanent magnet energy generating device (100, 300) of claim 1, wherein each of the first open section (107a, 307a) and the second open section (107b, 307b) of each magnet pocket (108, 308) of the rotor (102, 308) extends from a mid-portion of an associated one of a first magnetic end (106a, 306a) and a second magnet end (106b, 306b) of an associated magnet (108, 308) in the magnet pocket (108, 308) to an associated pocket first side (108c, 308c) of the magnet pocket (106, 308).

8. The permanent magnet energy generating device (100, 300) of claim 1, wherein each of the first open section (107a, 307a) and the second open section (107b, 307b) of each magnet pocket (108, 308) of the rotor (102, 302) includes a curved portion that extends radially inward beyond a second magnet side (106d, 306d) of an associated magnet (106, 306) in the magnet pocket (108, 308).

9. The permanent magnet energy generating device (100, 300) of claim 1, wherein the outer surface (410) of the rotor (400) includes a plurality of grooves (412), each groove (412) positioned between adjacent magnet pockets (408).

10. The permanent magnet energy generating device (100, 300) of claim 8, wherein the rotor (400) includes a plurality of passages (414), each passage (414) radially aligned with an associated groove (412) of the plurality of grooves (412).
